# EUROPEAN PATENT SPECIFICATION

(11) **EP 4 565 407 B1**
(45) Date of publication and mention of the grant of the patent: **08.04.2026**
(21) Application number: 23750754.6
(22) Date of filing: 21.07.2023
(51) Int. Cl.: B29C 49/12, B29C 49/66, B29C 49/64, B29C 49/48

(54) **METHOD FOR FORMING A CONTAINER**
VERFAHREN ZUR HERSTELLUNG EINES BEHÄLTERS
PROCÉDÉ DE FORMATION D'UN CONTENANT

(30) Priority: 04.08.2022 IT 202200016653
(43) Date of publication of application: 11.06.2025
(73) Proprietor: PIBIPLAST S.P.A., 42015 Correggio (RE) (IT)
(72) Inventor: CAGLIERIS, Manuele, 22063 Cantu' (IT); PASCUCCI, Roberto, 59100 Prato (IT)
(74) Representative: Monelli, Alberto
(86) International application number: PCT/IB2023/057437
(87) International publication number: WO 2024/028687

(56) References cited:
- JP-A- S5 712 617
- JP-A- S60 112 419
- NZ-A- 522 763
- US-A- 5 411 698
- US-A- 6 080 353

## Description

### Technical field

The present invention relates to a method for forming an at least partially opaque container. It is typically a container for containing cosmetic products, e.g. creams.

### Prior art

Solutions are known for making opaque containers. They envisage, for example, making transparent containers and then opacifying them by painting. One drawback of this solution is linked to the fact that this process requires additional times, costs and equipment. In fact, over time the paint may become scratched or detached with an anti-aesthetic effect.

Another solution is known as "Heat & Cool". This solution envisages heating the forming mould, then waiting for a predetermined period of time and then cooling the mould. The step of heating the mould takes place by means of a heating liquid that laps the mould. The step of cooling the mould takes place by means of a cooling liquid that laps the mould. This mould cooling step is accompanied by the step of opacifying the container. A "misty" effect is thus obtained on the container itself. A drawback of this solution is connected with the fact that "Heat & Cool" solutions have not insignificant costs.

Solutions for making containers are disclosed in JPS57 12617 which discloses a method for forming a container, comprising the steps of:
- positioning a first preform made of plastic material in a forming chamber of the mould;
- counter-shaping the first preform to the forming chamber obtaining the first container; the step of counter-shaping the first preform comprises the step of performing a blowing the first preform placed inside the forming chamber; at least a portion of a surface of the mould which delimits the forming chamber being shaped,
- cooling said first container by introducing a gaseous stream into the container;
- removing said first container from the mould;said method comprising also the following steps:
- introducing a second preform after the step of removing the first container;
- performing the blowing of the second preform obtaining a second container;
- cooling a wall of said second container by introducing a gaseous stream into the second container;
- removing said second container from the mould.

### Object of the invention

The object of the present invention is to propose a method for forming an opaque container which allows to optimise the movement of containers, minimising the risk of the drawbacks described above.

The defined technical task and the specified aims are substantially achieved by a method for conveying containers, comprising the technical features set forth in one or more of the appended claims.

### Brief description of the drawings

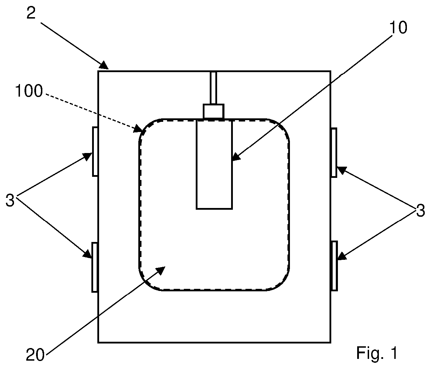

Further characteristics and advantages of the present invention will become more apparent from the approximate and thus non-limiting description of a method for forming a container, as illustrated in the appended figure 1, which represents a schematic view of the apparatus for implementing the method.

### Detailed description of preferred embodiments of the invention

The subject matter of the present invention is a method for forming a container 100 according to claim 1 (this container has at least one opaque part). The method comprises the step of positioning a first preform 10 in a forming chamber 20 of the mould 2. During the present discussion for simplicity purposes reference is made to one forming chamber 20, but there may be several forming chambers. Appropriately, in that case, the method would be identical and simultaneous in each of the forming chambers 20. Appropriately, the first preform 10 is made of plastic material, for example PET. The mould 2 may appropriately comprise several half-moulds that can be moved towards/away from one another. When they are moved towards one another, they thus define the forming chamber 20; when they are moved away from one another they enable the removal of the container. For example, the half-moulds could comprise two lateral portions that can be moved towards/away from one another and possibly a lower bottom.

Appropriately, the method envisages the mould 2 being hot. The method also comprises the step of heating the mould 2 at least at the beginning of the forming process (before shaping the initial preform). Then, the mould 2 is advantageously kept at such temperature and various preforms are inserted in succession, removing the related containers.

The method comprises the step of counter-shaping the first preform 10 to the forming chamber 20 obtaining the first container 100; the step of counter-shaping the first preform 10 comprises the step of performing a blowing of the first preform 10 inside the forming chamber 20. In this way the container 100 is obtained (schematically illustrated with a broken line in figure 1). At least one portion of a surface of the mould 2 that delimits the forming chamber 20 is shaped to obtain opacification of at least one portion of the first container 100. This portion of surface has a pattern of raised areas. In this way the surface of the first container 100, coming into contact with these discontinuities while still hot, follows these discontinuities and becomes opaque.

The step of performing a blowing of the first preform 10 advantageously but not necessarily comprises the step of introducing into the first preform 10 a fluid for a period of at least 2 seconds.

The step of counter-shaping the first preform 10 to the mould 2 may comprise the step of stretching the first preform 10 by means of a stretching rod 11 which projects internally to the first preform 10. The stretching rod 11 exerts a stretching action internal to the first preform 10 which facilitates blowing in the operation of correctly shaping the first preform 10.

The method comprises the step of cooling the first container 100 by introducing a gaseous stream into the container 100. In this way, the opacification is fixed onto the first container. The opacification thus remains stable and permanent. In fact, as the first container 100 cools, the opacification is consolidated together with the rest of the first container 100. Alternatively, if the first container 100 were removed from the mould 2 still hot (and thus malleable) without appropriate cooling it could lose the opacification or even collapse.

The step of cooling the first container 100 by introducing a gaseous stream into the container 100 takes place after the blowing step has been performed. Appropriately, the gaseous stream is introduced at a temperature comprised between 20°C and -50°C.

The step of introducing a gaseous stream into the container 100 preferably takes place by dispensing the gaseous stream through at least one hole placed on the stretching rod 11. The step of performing a blowing of the first preform 10 comprises the step of introducing into the first preform 10 a fluid through at least one nozzle external to the stretching rod 11 (e.g. at least one nozzle external to the first preform 10 or which projects internally to the first preform 10). Therefore, the blowing fluid and gaseous stream can be introduced into the first preform/first container by the same conduit or separate conduits.

Appropriately, the step of introducing a gaseous stream into the container 100 for cooling it takes place by introducing a gaseous stream for a period greater than 2 seconds (however this duration varies according to various parameters, e.g. the shape to be obtained and the material). Appropriately, this gaseous stream is recirculated inside the forming chamber 20.

Possibly, between the dispensing of the blowing fluid and the dispensing of the gaseous stream there may be a time period in which nothing is dispensed into the preform/container. Appropriately, once one step is finished the other begins straight away.

Appropriately, the blowing fluid is air. Appropriately, the gaseous cooling stream is air. Therefore, the fluid and the gaseous stream may be the same fluid.

The method envisages removing the first container 100 from the mould 2. Appropriately, the step of removing the first container 100 from the mould 2 takes place with the first container 100 at a maximum temperature of less than 40°C. In an alternative solution, the step of removing the first container 100 from the mould 2 takes place with the first container 100 at a temperature comprised between 40° and 80°C, but in that case the first container 100 is placed in an auxiliary cooling chamber to complete the cooling process.

The method envisages keeping the mould at a higher temperature than room temperature at least from the step of performing the blowing to that of removing the first container 100 from the mould 2.

The step of keeping the mould 2 a higher temperature than room temperature takes place by means of a heating element 3 external to a forming chamber 20 in which the first preform 10 is placed.

For example, the heating element 3 may be an electrical resistor or a heating fluid that circulates in one or more conduits, etc. Appropriately, this heating fluid transits, at least for a section, inside the thickness of the walls of the mould 2.

The method does not envisage the use of elements dedicated to the cooling of the mould 2. In particular, no cooling element intervenes directly on the mould 2. The mould 2 is heated to keep it at that temperature considering normal dissipations and the fact that introducing a gaseous cooling fluid into the preforms would eventually cool it down. The cooling of the mould 2 is in general to be avoided. The first preform 10 is introduced into the mould 2 at high temperature (e.g. at a temperature greater than 80°C) and removed with the mould at high temperature (e.g. at a temperature greater than 80°C).

In particular, the step of keeping said mould 2 at higher temperature than room temperature comprises the step of keeping the maximum temperature time trend of said mould 2 within a range of about 30°C (at least from the step of performing said blowing to that of removing said first container 100). In a particular non-limiting embodiment, for example, it could fluctuate between 60° and 150°C. The temperature of the mould 2 is quite uniform, but the maximum temperature is the maximum temperature detectable moment by moment in/on walls of the mould 2.

For example, the step of keeping the mould 2 at a higher temperature than room temperature comprises the step of keeping said mould 2 at a maximum temperature greater than 60°C (preferably greater than 100°C) at least from the step of performing said blowing to that of removing said first container 100.

Even more precisely, the step of keeping said mould 2 at a higher temperature than room temperature comprises the step of keeping the maximum temperature of said mould 2 comprised between 60°C and 180°C at least from the step of performing said blowing to that of removing said first container 100.

The method also comprises the steps of:
- introducing a second preform after the step of removing the first container 100;
- performing a blowing of the second preform obtaining a second container; in the appended figure the second preform and the second container may hypothetically be identical to the first preform 10 and the first container 100;
- cooling a wall of said second container by introducing a gaseous stream into the second container for fixing the opacification obtained onto the second container;
- removing said second container from the mould 2;
- keeping said mould 2 at a temperature higher than room temperature. The latter step of keeping said mould 2 at a higher temperature than room temperature comprises the step of keeping said mould 2 at a maximum temperature higher than 80°C at least from the step of introducing the first preform 10 to the step of removing the second container. The numeral adjective "first" in the present discussion is only used to distinguish the preforms or containers from one another.

The present invention achieves important advantages.

Above all, it enables the cycle times to be reduced. This enables to speed up and increase production. In fact, the external mould 2 is not continuously heated to then be cooled in order to cool the preform.

Furthermore, the present invention enables the overall construction complexity of the machine to be reduced and thus the costs to be reduced. The invention as it is conceived is susceptible to numerous modifications and variants, all falling within the scope of the inventive concept characterised thereby. Further, all the details can be replaced with other technically equivalent elements. In practice, all the materials used, as well as the dimensions, can be any whatsoever, according to need.

## Claims

1. A method for forming a container, comprising the steps of:
- positioning a first preform (10) made of plastic material in a forming chamber (20) of the mould (2);
- counter-shaping the first preform (10) to the forming chamber (20) obtaining the first container (100); the step of counter-shaping the first preform (10) comprises the step of performing a blowing the first preform (10) placed inside the forming chamber (20); at least a portion of a surface of the mould (2) which delimits the forming chamber (20) being shaped to obtain an opacification of at least a portion of the first container (100); said portion of the surface of the mould (2) having discontinuities which define a pattern of raised areas; a surface of the first container (100), coming into contact with these discontinuities while still hot, follows these discontinuities and becomes opaque obtaining said opacification;
- cooling said first container (100) by introducing a gaseous stream into the container (100) for fixing the opacification on the first container (100);
- removing said first container (100) from the mould (2);
- keeping said mould (2) at a higher temperature than room temperature at least from the step of performing said blowing of the first preform (10) to that of removing said first container (100);
said method comprising also the following steps:
- introducing a second preform after the step of removing the first container (100);
- performing the blowing of the second preform obtaining a second container;
- cooling a wall of said second container by introducing a gaseous stream into the second container for fixing the opacification obtained onto the container;
- removing said second container from the mould (2);
- keeping said mould (2) at a higher temperature than room temperature comprises the step of keeping said mould (2) at a maximum temperature higher than 60°C at least from the step of introducing the first preform (10) to the step of removing the second container.

2. The method according to claim 1, **characterised in that** said step of keeping said mould (2) at a higher temperature than room temperature comprises the step of keeping the maximum temperature time trend of said mould (2) within a range of about 30°C at least from the step of performing said blowing of the first preform (10) to that of removing said first container (100).

3. The method according to claim 1 or 2, **characterised in that** said step of keeping said mould (2) at a higher temperature than room temperature comprises the step of keeping said mould (2) at a maximum temperature higher than 60°C at least from the step of performing said blowing of the first preform (10) to that of removing said first container (100).

4. The method according to any one of the preceding claims, **characterised in that** said step of keeping said mould (2) at a higher temperature than room temperature comprises the step of keeping the maximum temperature of said mould (2) comprised between 60°C and 180°C at least from the step of performing said blowing of the first preform (10) to that of removing said first container (100).

5. The method according to any one of the preceding claims, **characterised in that** the step of keeping said mould (2) at a higher temperature than room temperature takes place by means of a heating element (3) external to a forming chamber (20) in which the first preform (10) is placed.

6. The method according to any one of the preceding claims, **characterised in that** the step of counter-shaping the first preform (10) to the mould (2) comprises the step of stretching the first preform (10) by means of a stretching rod (11) which projects internally to the first preform (10);
the step of introducing a gaseous stream into the container (100) takes place by dispensing the gaseous stream through at least one hole placed on the stretching rod (11);
the step of performing the blowing of the first preform (10) comprises the step of introducing into the first preform (10) a fluid through at least one nozzle external to the stretching rod (11).

## Patentansprüche

1. Verfahren zur Herstellung eines Behälters, umfassend die folgenden Schritte:
- Positionieren eines ersten Vorformlings (10) aus Kunststoffmaterial in einer Herstellungskammer (20) der Form (2);
- Ausformen des ersten Vorformlings (10) gegenständig zu der Herstellungskammer (20), wodurch der erste Behälter (100) erhalten wird; der Schritt zum Gegenformen des ersten Vorformlings (10) umfasst den Schritt zum Durchführen eines Blasens des ersten Vorformlings (10), der in der Herstellungskammer (20) platziert ist; wobei mindestens ein Abschnitt einer Oberfläche der Form (2), die die Herstellungskammer (20) begrenzt, ausgeformt ist, um eine Opazität von mindestens einem Abschnitt des ersten Behälters (100) zu erhalten; wobei der Abschnitt der Oberfläche der Form (2) Diskontinuitäten aufweist, die ein Muster von erhabenen Bereichen definieren; wobei eine Oberfläche des ersten Behälters (100), die mit den Diskontinuitäten in Kontakt kommt, während sie noch heiß sind, den Diskontinuitäten folgt und opak wird, wodurch die Opazität erhalten wird;
- Kühlen des ersten Behälters (100) durch Einleiten eines gasförmigen Stroms in den Behälter (100) zum Fixieren der Opazität auf dem ersten Behälter (100);
- Entfernen des ersten Behälters (100) aus der Form (2);
- Halten der Form (2) auf einer höheren Temperatur als die Raumtemperatur zumindest von dem Schritt zum Durchführen des Blasens des ersten Vorformlings (10) bis zum Entfernen des ersten Behälters (100);
wobei das Verfahren auch die folgenden Schritte umfasst:
- Einführen eines zweiten Vorformlings nach dem Schritt zum Entfernen des ersten Behälters (100);
- Durchführen des Blasens des zweiten Vorformlings, wodurch ein zweiter Behälter erhalten wird;
- Kühlen einer Wand des zweiten Behälters durch Einleiten eines gasförmigen Stroms in den zweiten Behälter zum Fixieren der erhaltenen Opazität auf dem Behälter;
- Entfernen des zweiten Behälters aus der Form (2);
- Halten der Form (2) auf einer höheren Temperatur als die Raumtemperatur umfasst den Schritt zum Halten der Form (2) auf einer maximalen Temperatur höher als 60 °C zumindest von dem Schritt zum Einführen des ersten Vorformlings (10) zum Schritt zu dem Entfernen des zweiten Behälters.

2. Verfahren nach Anspruch 1, **dadurch gekennzeichnet, dass** der Schritt zum Halten der Form (2) auf einer höheren Temperatur als die Raumtemperatur den Schritt zum Halten des maximalen Temperatur-Zeit-Trends der Form (2) in einem Bereich von etwa 30 °C zumindest von dem Schritt zum Durchführen des Blasens des ersten Vorformlings (10) zu dem zum Entfernen des ersten Behälters (100) umfasst.

3. Verfahren nach Anspruch 1 oder 2, **dadurch gekennzeichnet, dass** der Schritt zum Halten der Form (2) auf einer höheren Temperatur als die Raumtemperatur den Schritt zum Halten der Form (2) auf einer maximalen Temperatur höher als 60 °C zumindest von dem Schritt zum Durchführen des Blasens des ersten Vorformlings (10) bis zu dem zum Entfernen des ersten Behälters (100) umfasst.

4. Verfahren nach einem der vorhergehenden Ansprüche, **dadurch gekennzeichnet, dass** der Schritt zum Halten der Form (2) auf einer höheren Temperatur als die Raumtemperatur den Schritt zum Halten der maximalen Temperatur der Form (2) zwischen 60 °C und 180 °C zumindest von dem Schritt zum Durchführen des Blasens des ersten Vorformlings (10) bis zu dem zum Entfernen des ersten Behälters (100) umfasst.

5. Verfahren nach einem der vorhergehenden Ansprüche, **dadurch gekennzeichnet, dass** der Schritt zum Halten der Form (2) auf einer höheren Temperatur als die Raumtemperatur mittels eines Heizelements (3) außerhalb einer Herstellungskammer (20) erfolgt, in der der erste Vorformling (10) platziert ist.

6. Verfahren nach einem der vorhergehenden Ansprüche, **dadurch gekennzeichnet, dass** der Schritt zum Ausformen des ersten Vorformlings (10) gegenständig zu der Form (2) den Schritt zum Recken des ersten Vorformlings (10) mittels einer Reckstange (11) umfasst, die innerhalb des ersten Vorformlings (10) vorsteht;
der Schritt zum Einleiten eines gasförmigen Stroms in den Behälter (100) erfolgt durch Abgeben des gasförmigen Stroms durch mindestens ein Loch, das an der Reckstange (11) angeordnet ist;
der Schritt zum Durchführen des Blasens des ersten Vorformlings (10) den Schritt zum Einleiten eines Fluids durch mindestens eine Düse außerhalb der Reckstange (11) in den ersten Vorformling (10) umfasst.

## Revendications

1. Procédé de formation d'un contenant, comprenant les étapes de:
- positionner une première préforme (10) en matière plastique dans une chambre de formation (20) du moule (2) ;
- contre-former la première préforme (10) à la chambre de formation (20) pour obtenir le premier contenant (100); l'étape consistant à contre-former la première préforme (10) comprend l'étape consistant à effectuer un soufflage de la première préforme (10) placée à l'intérieur de la chambre de formation (20); au moins une partie d'une surface du moule (2) qui délimite la chambre de formation (20) étant formée de manière à obtenir une opacification d'au moins une partie du premier contenant (100); ladite partie de la surface du moule (2) présentant des discontinuités qui définissent un motif de zones surélevées ; une surface du premier contenant (100), entrant en contact avec ces discontinuités alors qu'elle est encore chaude, suit ces discontinuités et devient opaque, obtenant ladite opacification;
- refroidir ledit premier contenant (100) en introduisant un flux gazeux dans le contenant (100) pour fixer l'opacification sur le premier contenant (100);
- retirer ledit premier contenant (100) du moule (2);
- maintenir ledit moule (2) à une température supérieure à la température ambiante au moins à partir de l'étape consistant à effectuer ledit soufflage de la première préforme (10) jusqu'à celle consistant à retirer ledit premier contenant (100);
ledit procédé comprenant aussi les étapes suivantes:
- introduire une seconde préforme après l'étape consistant à retirer le premier contenant (100);
- effectuer le soufflage de la seconde préforme pour obtenir un second contenant;
- refroidir une paroi dudit second contenant en introduisant un flux gazeux dans le second contenant afin de fixer l'opacification obtenue sur le contenant;
- retirer ledit second contenant du moule (2);
- le fait de maintenir ledit moule (2) à une température supérieure à la température ambiante comprend l'étape consistant à maintenir ledit moule (2) à une température maximale supérieure à 60 °C au moins à partir de l'étape consistant à introduire la première préforme (10) jusqu'à l'étape consistant à retirer le second contenant.

2. Procédé selon la revendication 1, **caractérisé en ce que** ladite étape consistant à maintenir ledit moule (2) à une température supérieure à la température ambiante comprend l'étape consistant à maintenir la tendance temporelle de la température maximale dudit moule (2) dans une plage d'environ 30 °C au moins entre l'étape consistant à effectuer ledit soufflage de la première préforme (10) et celle consistant à retirer ledit premier contenant (100).

3. Procédé selon la revendication 1 ou 2, **caractérisé en ce que** ladite étape consistant à maintenir ledit moule (2) à une température supérieure à la température ambiante comprend l'étape consistant à maintenir ledit moule (2) à une température maximale supérieure à 60 °C au moins à partir de l'étape consistant à effectuer ledit soufflage de la première préforme (10) jusqu'à celle consistant à retirer ledit premier contenant (100).

4. Procédé selon l'une quelconque des revendications précédentes, **caractérisé en ce que** ladite étape consistant à maintenir ledit moule (2) à une température supérieure à la température ambiante comprend l'étape consistant à maintenir la température maximale dudit moule (2) comprise entre 60 et 180 °C au moins à partir de l'étape consistant à effectuer ledit soufflage de la première préforme (10) jusqu'à celle consistant à retirer ledit premier contenant (100).

5. Procédé selon l'une quelconque des revendications précédentes, **caractérisé en ce que** l'étape consistant à maintenir ledit moule (2) à une température supérieure à la température ambiante s'effectue au moyen d'un élément chauffant (3) externe à une chambre de formation (20) dans laquelle est placée la première préforme (10).

6. Procédé selon l'une quelconque des revendications précédentes, **caractérisé en ce que** l'étape consistant à contre-former la première préforme (10) sur le moule (2) comprend l'étape consistant à étirer la première préforme (10) au moyen d'une tige d'étirage (11) qui fait saillie à l'intérieur de la première préforme (10); l'étape consistant à introduire un flux gazeux dans le contenant (100) s'effectue en distribuant le flux gazeux à travers au moins un trou placé sur la tige d'étirage (11) ;
l'étape consistant à effectuer le soufflage de la première préforme (10) comprend l'étape consistant à introduire dans la première préforme (10) un fluide à travers au moins une buse externe à la tige d'étirage (11).
